(19) Europäisches Patentamt
European Patent Office
Office européen des brevets

(11) EP 2 270 080 B1

(12) # EUROPEAN PATENT SPECIFICATION

(45) Date of publication and mention of the grant of the patent:
**10.05.2017 Bulletin 2017/19**

(51) Int Cl.:
***C08J 7/04*** (2006.01) ***B32B 25/20*** (2006.01)

(21) Application number: **10006673.7**

(22) Date of filing: **28.06.2010**

(54) **HEAT-CONDUCTIVE SILICONE RUBBER COMPOSITE SHEET**
WÄRMELEITENDE SILIKONGUMMIVERBUNDSTOFFPLATTE
FEUILLE COMPOSITE EN CAOUTCHOUC DE SILICONE THERMOCONDUCTEUR

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **29.06.2009 JP 2009153236**

(43) Date of publication of application:
**05.01.2011 Bulletin 2011/01**

(73) Proprietor: **Shin-Etsu Chemical Co., Ltd.**
**Tokyo (JP)**

(72) Inventors:
- **Endo, Akihiro**
**Annaka-shi**
**Gunma-ken (JP)**
- **Takei, Hiroshi**
**Annaka-shi**
**Gunma-ken (JP)**

(74) Representative: **Peters, Hajo et al**
**ZACCO GmbH**
**Bayerstrasse 83**
**80335 München (DE)**

(56) References cited:
**EP-A1- 1 726 622**
**EP-A1- 1 788 031**
**US-A1- 2004 067 372**
**US-A1- 2007 185 259**
**US-A1- 2008 057 325**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 270 080 B1

## Description

### Technical Field

The present invention relates to a heat-conductive silicone rubber composite sheet that is ideal as a heat-radiating member that is interposed between a heat-generating electronic component and a heat-radiating component such as a heat-radiating fin. The heat-conductive silicone rubber composite sheet exhibits good electrical insulation properties and thermal conductivity, as well as excellent strength and flexibility.

### Background Art

Conventionally, electrically insulating heat-conductive materials have been used as heat-radiating members for heat-generating electronic and electrical components such as power transistors, MOS transistors, FET, thyristors, rectifiers and transformers and the like. Examples of these electrically insulating heat-conductive materials include materials prepared by blending a metal oxide powder such as beryllium oxide, aluminum oxide, aluminum hydroxide, magnesium oxide or zinc oxide into a synthetic rubber such as a silicone rubber (see Patent Document 1), and materials prepared by blending boron nitride into a silicone rubber and then reinforcing the mixture with a network-type insulating material (see Patent Document 2).

Further, one possible technique for improving the thermal conductivity of the heat-radiating member is to reduce the thickness of the member as much as possible. However, problems may arise if the thickness is reduced too much, including reductions in the strength, durability and/or electrical insulation properties of the heat-radiating member. One method that has been proposed for addressing these problems involves forming the heat-radiating member as a multilayer structure, wherein a film having excellent heat resistance, electrical insulation properties and mechanical strength, such as an aromatic polyimide, a polyamide, a polyamideimide or a polyethylene naphthalate is used for the inner layer, and silicone rubber layers which contain added beryllium oxide, aluminum oxide or aluminum hydroxide or the like and exhibit excellent thermal conductivity and electrical properties are used for the outer layers. For example, Patent Document 3 discloses a heat-conductive electrically insulating member having a laminated structure composed of at least three layers, wherein a polyimide(amide) film containing a predetermined amount of added aluminum oxide is used as an inner layer, and silicone rubber layers containing added aluminum oxide or the like are used as a pair of outer layers that are provided on both surfaces of the inner layer.

However, in these heat-conductive electrically insulating members having a multilayer structure, the adhesion between the silicone rubber outer layers and the film of an aromatic polyimide that functions as the inner layer tends to be unstable, meaning the members tend to be prone to inferior durability, with interlayer peeling occurring over time.

Examples of structures that have been proposed to address these problems include a heat-conductive silicone rubber composite sheet comprising a laminated structure in which silicone rubber layers obtained by curing a composition comprising a silicon compound-based adhesion promoter having at least one functional group selected from the group consisting of an epoxy group, alkoxy groups, a vinyl group, and a group represented by the formula Si-H are used as the outer layers (see Patent Document 4). However, in this heat-conductive silicone rubber composite sheet, the thermal conductivity of the film formed from an aromatic polyimide that is used as the inner layer is significantly lower than the thermal conductivity of the heat-conductive silicone rubber layers used as the outer layers, which reduces the thermal conductivity of the overall composite sheet.

Other examples of conventional heat-conductive silicone rubber composite sheets include those disclosed in Patent Documents 5 to 7, but none of these composite sheets is able to provide a combination of excellent interlayer adhesion and superior thermal conductivity.

### Prior Art Documents

[Patent Document 1] JP 47-32400 A
[Patent Document 2] JP 54-184074 U
[Patent Document 3] JP 2-24383 B
[Patent Document 4] JP 2004-122664 A
[Patent Document 5] JP 2001-018330 A
[Patent Document 6] JP 11-157011 A
[Patent Document 7] JP 10-237228 A

DISCLOSURE OF INVENTION

Objects of the Invention

The present invention has been developed in light of the above problems associated with the conventional technology, and has an object of providing a heat-conductive silicone rubber composite sheet having excellent electrical insulation properties, superior strength and flexibility, excellent interlayer adhesion, and particularly favorable thermal conductivity.

SUMMARY OF THE INVENTION

In order to achieve this object, the present invention provides:

a heat-conductive silicone rubber composite sheet, comprising a laminated structure comprising an inner layer and a pair of outer layers laminated to both surfaces of the inner layer, wherein

(A) the inner layer is an electrically insulating synthetic resin film layer having a thermal conductivity of not less than 0.3 W/m·K, and
(B) the outer layers are silicone rubber layers formed by curing a composition comprising: (a) an organopolysiloxane, (b) a curing agent, (c) a heat-conductive filler, and (d) a silicon compound-based adhesion promoter having at least one group selected from the group consisting of an epoxy group, alkoxy groups, a methyl group, a vinyl group, and a group represented by the formula Si-H.

Effects of Invention

Because the heat-conductive silicone rubber composite sheet of the present invention contains an added heat-conductive filler, not only are the outer layers formed from silicone rubber layers with favorable thermal conductivity, but the inner layer is also formed from a synthetic resin film layer with superior thermal conductivity, meaning the overall composite sheet also exhibits excellent thermal conductivity. Further, the inner layer also exhibits excellent levels of electrical insulation and mechanical strength, and the resulting reinforcing effect means that the composite sheet of the present invention exhibits satisfactory strength and flexibility. For these reasons, the composite sheet of the present invention is ideal as a heat-radiating member that is interposed between a heat-generating electronic or electrical component and a heat-radiating component. Because the composite sheet of the present invention exhibits superior thermal conductivity, it is particularly effective for high-heat-generating devices. Moreover, because the silicone rubber layers also contain an adhesion promoter, the silicone rubber layers and the synthetic resin film layer can be bonded together powerfully, meaning the composite sheet of the present invention also exhibits excellent durability.

DETAILED DESCRIPTION OF EMBODIMENTS OF THE INVENTION

A more detailed description of the present invention is provided below. In this description, values for the thermal conductivity of the synthetic resin film layer refer to values measured at 25°C using a laser flash method.

[(A) Heat-conductive inner layer]

There are no particular restrictions on the inner layer for the composite sheet of the present invention, provided it is a synthetic resin film layer that exhibits excellent heat resistance and electrical insulation, has high levels of flexibility and mechanical strength, and has a thermal conductivity of not less than 0.3 W/m·K. Any conventional synthetic resin film layers that satisfy these requirements may be used.

The thermal conductivity of this heat-conductive synthetic resin film layer is not less than 0.3 W/m·K, and is preferably 0.4 W/m·K or higher. If the thermal conductivity is less than 0.3 W/m·K, then the thermal conductivity of the composite sheet of the present invention is more likely to cause problems. In terms of achieving the object of the present invention, the thermal conductivity is preferably as high as possible, and although there are no particular restrictions on the upper limit for the thermal conductivity, from a practical perspective the thermal conductivity is not more than approximately 10 W/m·K.

The thickness of this heat-conductive synthetic resin film layer is typically within a range from 5 to 40 μm, and is preferably from 10 to 30 μm. If the thickness of this layer is too thick, then it may hinder the thermal conductivity of the composite sheet of the present invention, whereas if the layer is too thin, the strength required of the layer as an inner layer may be insufficient, the withstand voltage may deteriorate, and the electrical insulation performance of the

layer may be inadequate. Moreover, the heat-conductive synthetic resin film layer must not contain any holes that can cause a reduction in the withstand voltage properties.

The heat-conductive synthetic resin film layer with a thermal conductivity of not less than 0.3 W/m·K that is used as the inner layer is typically formed from a film comprising a synthetic resin and a heat-conductive powder dispersed within the synthetic resin. The synthetic resin and the heat-conductive powder may each be composed of either a single material, or a combination of two or more materials.

Examples of the synthetic resin include aromatic polyimides, polyamides, polyamideimides, polyesters such as polyethylene naphthalate, and fluoropolymers such as polytetrafluoroethylene (PTFE) and copolymers of tetrafluoroethylene and perfluoroalkyl vinyl ethers. In those cases where a fluoropolymer is used as the synthetic resin, the surface of the resulting film is preferably subjected to a chemical etching treatment using a metallic Na / naphthalene-based treatment liquid in order to improve the adhesiveness of the film.

Examples of the heat-conductive powder that is dispersed within the synthetic resin include heat-conductive inorganic powders such as zinc oxide powder, aluminum oxide powder, magnesium oxide powder, aluminum hydroxide powder, boron nitride powder, aluminum nitride powder, silicon carbide powder and diamond powder. However, the heat-conductive powder is not limited to these powders, and any powder that exhibits thermal conductivity and insulation properties may be used. The heat-conductive powders can be used singly or a combination of two or more thereof.

Furthermore, the heat-conductive synthetic resin film layer with a thermal conductivity of not less than 0.3 W/m·K need not necessarily contain a heat-conductive powder, but it may be a heat-conductive synthetic resin film in which the thermal conductivity has been increased by improving the crystallinity of the synthetic resin.

Furthermore, the heat-conductive synthetic resin film layer with a thermal conductivity of not less than 0.3 W/m·K may be a film of a synthetic resin with an increased crystallinity in which a heat-conductive powder has been dispersed.

The synthetic resin film layer preferably has a melting point of not less than 200°C, and more preferably 250°C or higher, as this ensures that the film layer exhibits excellent heat resistance and is less likely to suffer from deterioration in the mechanical strength or thermal deformation.

In a preferred example of the synthetic resin film layer, a commercially available aromatic polyimide-based film such as Kapton (a registered trademark) of MT type (a product name, manufactured by DuPont-Toray Co., Ltd.) may be used as the heat-conductive film having excellent heat resistance with a melting point of 250°C or higher.

[(B) Outer layers]

The outer layers included within the composite sheet of the present invention are silicone rubber layers formed by curing a composition comprising: (a) an organopolysiloxane, (b) a curing agent, (c) a heat-conductive filler, and (d) a silicon compound-based adhesion promoter having at least one group selected from the group consisting of an epoxy group, alkoxy groups, a methyl group, a vinyl group, and a group represented by the formula Si-H. The thickness of each of these outer layers (B) may be set in accordance with the intended configuration and application of the composite sheet of the present invention, and the thickness is within a range from 30 to 800 μm, and preferably from 50 to 400 μm. In general, if the outer layers are too thin, then the ability of the layer to track the shape of an electronic component deteriorates and the thermal conductivity tends to worsen, whereas if the outer layers are too thick, then the heat transmission properties tend to deteriorate, and either case is undesirable.

The component (a) may be either a single compound, or a combination of two or more compounds.

<(a) Organopolysiloxane>

The organopolysiloxane of the component (a) is a compound represented by an average composition formula $R^1{}_aSiO_{(4-a)/2}$ (wherein $R^1$ represents identical or different substituted or unsubstituted monovalent hydrocarbon group of 1 to 10 carbon atoms, and preferably 1 to 8 carbon atoms, and a is a positive number within a range from 1.90 to 2.05).

Examples of $R^1$ include alkyl groups such as a methyl group, ethyl group, propyl group, butyl group, pentyl group, hexyl group, heptyl group, octyl group or nonyl group, decyl group, cycloalkyl groups such as a cyclopentyl group or cyclohexyl group, aryl groups such as a phenyl group, tolyl group, xylyl group or naphthyl group, aralkyl groups such as a benzyl group, phenethyl group or 3-phenylpropyl group, halogenated alkyl groups such as a 3,3,3-trifluoropropyl group or 3-chloropropyl group, and alkenyl groups such as a vinyl group, allyl group, butenyl group, pentenyl group or hexenyl group.

Typically, this organopolysiloxane of the component (a) has a main chain that is either formed solely from dimethylsiloxane units, or formed from a similar main chain in which a portion of the methyl groups have been substituted with vinyl groups, phenyl groups or 3,3,3-trifluoropropyl groups or the like. Furthermore, the molecular chain terminals may be blocked with triorganosilyl groups or hydroxyl groups. Examples of the triorganosilyl groups including a trimethylsilyl group, dimethylvinylsilyl group or trivinylsilyl group.

The polymerization degree of the component (a) is typically within a range from 200 to 12,000, and preferably from 200 to 10,000. The component (a) may be either an oil or a gum, and may be selected in accordance with factors such as the molding method to be used.

In those cases where the curing agent of the component (b) described below is an addition reaction-curable material comprising an organohydrogenpolysiloxane and a platinum-based catalyst, the organopolysiloxane of the component (a) is an organopolysiloxane containing at least two, and preferably three or more, alkenyl groups bonded to silicon atoms within each molecule. If the number of alkenyl groups bonded to silicon atoms is less than the lower limit of the above range, then the resulting composition may not cure satisfactorily. Furthermore, these silicon atom-bonded alkenyl groups are preferably vinyl groups. The alkenyl groups may exist at the molecular chain terminals, on side chains, or at both of these locations, although at least one alkenyl group is preferably bonded to a silicon atom at a molecular chain terminal.

Specific examples of the above type of organopolysiloxane (a) include copolymers of dimethylsiloxane and methylvinylsiloxane with both molecular chain terminals blocked with trimethylsiloxy groups, methylvinylpolysiloxane with both molecular chain terminals blocked with trimethylsiloxy groups, copolymers of dimethylsiloxane, methylvinylsiloxane and methylphenylsiloxane with both molecular chain terminals blocked with trimethylsiloxy groups, dimethylpolysiloxane with both molecular chain terminals blocked with dimethylvinylsiloxy groups, methylvinylpolysiloxane with both molecular chain terminals blocked with dimethylvinylsiloxy groups, copolymers of dimethylsiloxane and methylvinylsiloxane with both molecular chain terminals blocked with dimethylvinylsiloxy groups, copolymers of dimethylsiloxane, methylvinylsiloxane and methylphenylsiloxane with both molecular chain terminals blocked with dimethylvinylsiloxy groups, and dimethylpolysiloxane with both molecular chain terminals blocked with trivinylsiloxy groups. These compounds may be used individually, or in combinations of two or more compounds.

In those cases where the curing agent of the component (b) described below is an organic peroxide, although there are no particular restrictions on the organopolysiloxane of the component (a), an organopolysiloxane containing at least two alkenyl groups within each molecule is preferred.

In such cases, specific examples of the organopolysiloxane (a) include dimethylpolysiloxane with both molecular chain terminals blocked with dimethylvinylsiloxy groups, dimethylpolysiloxane with both molecular chain terminals blocked with methylphenylvinylsiloxy groups, copolymers of dimethylsiloxane and methylphenylsiloxane with both molecular chain terminals blocked with dimethylvinylsiloxy groups, copolymers of dimethylsiloxane and methylvinylsiloxane with both molecular chain terminals blocked with dimethylvinylsiloxy groups, copolymers of dimethylsiloxane and methylvinylsiloxane with both molecular chain terminals blocked with trimethylsiloxy groups, methyl(3,3,3-trifluoropropyl)polysiloxane with both molecular chain terminals blocked with dimethylvinylsiloxy groups, copolymers of dimethylsiloxane and methylvinylsiloxane with both molecular chain terminals blocked with silanol groups, and copolymers of dimethylsiloxane, methylvinylsiloxane and methylphenylsiloxane with both molecular chain terminals blocked with silanol groups. These compounds may be used individually, or in combinations of two or more compounds.

<(b) Curing agent>

In those cases where the component (b) is a hydrosilylation reaction curing agent, the curing agent consists of an organohydrogenpolysiloxane having an average of at least two hydrogen atoms bonded to silicon atoms within a single molecule, and a platinum-based catalyst. The organohydrogenpolysiloxane functions as a cross-linking agent that undergoes an addition reaction with the alkenyl groups contained within the component (a).

Specific examples of the organohydrogenpolysiloxane include methylhydrogenpolysiloxane with both molecular chain terminals blocked with trimethylsiloxy groups, copolymers of dimethylsiloxane and methylhydrogensiloxane with both molecular chain terminals blocked with trimethylsiloxy groups, copolymers of dimethylsiloxane, methylhydrogensiloxane and methylphenylsiloxane with both molecular chain terminals blocked with trimethylsiloxy groups, dimethylpolysiloxane with both molecular chain terminals blocked with dimethylhydrogensiloxy groups, copolymers of dimethylsiloxane and methylhydrogensiloxane with both molecular chain terminals blocked with dimethylhydrogensiloxy groups, copolymers of dimethylsiloxane and methylphenylsiloxane with both molecular chain terminals blocked with dimethylhydrogensiloxy groups, and methylphenylpolysiloxane with both molecular chain terminals blocked with dimethylhydrogensiloxy groups. These compounds may be used individually, or in combinations of two or more compounds.

In the composition used for forming the outer layers of the composite sheet of the present invention, the amount of the above organohydrogenpolysiloxane is typically sufficient to provide from 0.1 to 4.0 mols, and preferably 0.3 to 2.0 mols, of silicon atom-bonded hydrogen atoms within this component (b) per 1 mol of silicon atom-bonded alkenyl groups within the component (a). If the amount of this component (b) is too small, then the obtained silicone rubber composition may not cure satisfactorily, whereas in contrast, if the amount is too large, then the obtained silicone rubber composition may become extremely hard, and may develop a plurality of cracks on the surface.

The platinum-based catalyst that is used in combination with the organohydrogenpolysiloxane is a catalyst for promoting the curing of the composition. Examples of this platinum-based catalyst include chloroplatinic acid, alcohol

solutions of chloroplatinic acid, olefin complexes of platinum, alkenylsiloxane complexes of platinum, and carbonyl complexes of platinum. There are no particular restrictions on the amount of the platinum-based catalyst used in the composition, which need only be an effective catalytic quantity, although a typical amount, expressed as the mass of the platinum metal within the composition relative to the mass of the component (a), is within a range from 0.01 to 1,000 ppm, and an amount from 0.1 to 500 ppm is preferred. If the amount of the catalyst is too small, then the obtained silicone rubber composition may not cure satisfactorily, whereas in contrast, adding a large amount of the catalyst causes no further improvement in the curing rate of the silicone rubber composition, and may be uneconomical.

In those cases where the curing agent of the component (b) is an organic peroxide, examples of the organic peroxide include benzoyl peroxide, dicumyl peroxide, 2,5-dimethyl-2,5-bis-(t-butylperoxy)hexane, di-t-butyl peroxide and t-butyl perbenzoate. These compounds may be used either individually, or in combinations of two or more compounds. The amount added of this organic peroxide is typically within a range from 0.1 to 5 parts by mass per 100 parts by mass of the organopolysiloxane of the aforementioned component (a).

<(c) Heat-conductive filler>

Preferred examples of the heat-conductive filler of the component (c) include inorganic powders such as aluminum oxide, zinc oxide, silicon oxide, silicon carbide, aluminum nitride and boron nitride. These compounds of the component (c) may be used individually, or in combinations of two or more compounds.

The average particle size of this component (c) is preferably not more than 50 μm, and is more preferably 20 μm or less.

Furthermore, the amount added of this component (c) is typically within a range from 100 to 1,800 parts by mass, and preferably from 200 to 1,600 parts by mass, per 100 parts by mass of the component (a). If the amount added is too small, then the thermal conductivity of the outer layers may be unsatisfactory, whereas if the amount is too large, then blending the component (c) uniformly within the composition becomes difficult, and the molding workability tends to deteriorate.

<(d) Silicon compound-based adhesion promoter>

The component (d) is an important component in characterizing the heat-conductive silicone rubber composite sheet of the present invention, and adding this component to the silicone rubber composition used for forming the outer layers enables a powerful mutual adhesion to be achieved between the heat-conductive synthetic resin film layer of the inner layer (A) and the silicone rubber layers of the outer layers (B). As a result, a composite sheet can be obtained that exhibits excellent durability over long periods, with no interlayer peeling. Furthermore, because primer treatment of the heat-conductive synthetic resin film layer of the inner layer (A) aimed at improving the adhesion of the layer can be omitted, the production process of the composite sheet can be simplified, and because of the absence of a primer layer, a composite sheet with no reduction in thermal conductivity can be obtained.

The silicon compound-based adhesion promoter of the component (d) must be a silicon compound having at least one group selected from the group consisting of an epoxy group, alkoxy groups, a methyl group, a vinyl group, and a group represented by the formula Si-H. Silicon compounds having at least two of these groups within a single molecule are particularly preferred.

More preferably, in the case where the curing agent of the component (b) is a hydrosilylation reaction curing agent, the silicon compound of the component (d) comprises a vinyl group, a group represented by the formula Si-H or both thereof, and an epoxy group, an alkoxy group or both thereof. In another more preferred embodiment, in the case where the curing agent of the component (b) is an organic peroxide compound curing agent, the silicon compound of the component (d) comprises a methyl group, a vinyl group or both thereof, and an epoxy group, an alkoxy group or both thereof.

The amount added of this component (d) is typically within a range from 0.1 to 3.0 parts by mass, and preferably from 0.5 to 2.0 parts by mass, per 100 parts by mass of the component (a). If the amount added is too small, then a satisfactory adhesion-promoting effect may not be achievable, whereas if the amount is too large, then an undesirable loss in the mechanical properties may occur.

Specific examples of silicon compounds containing the above types of groups include the compounds presented below, although the present invention is not restricted to the compounds shown below.

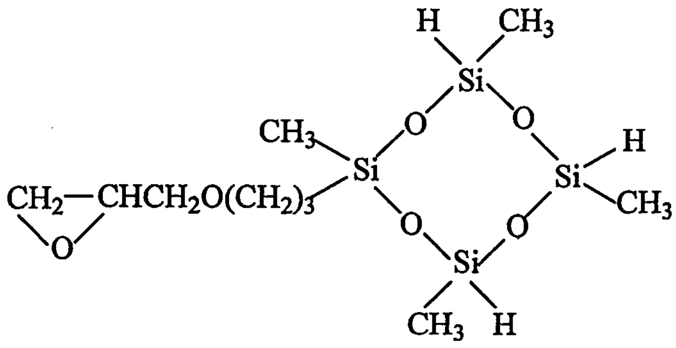

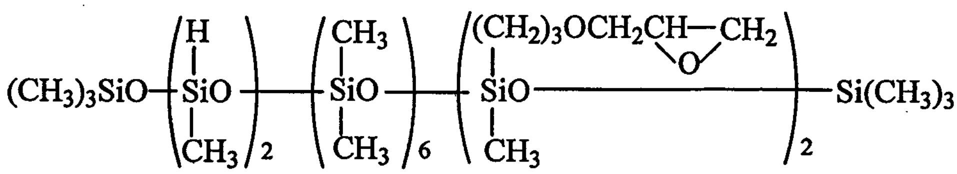

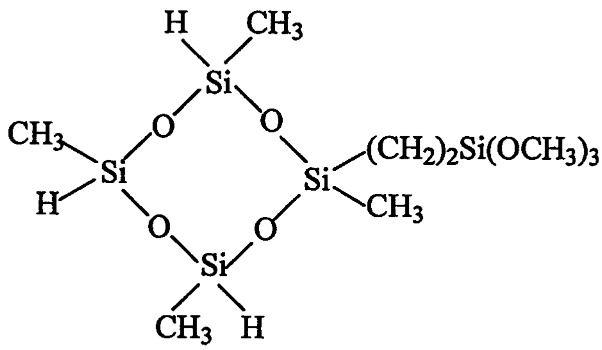

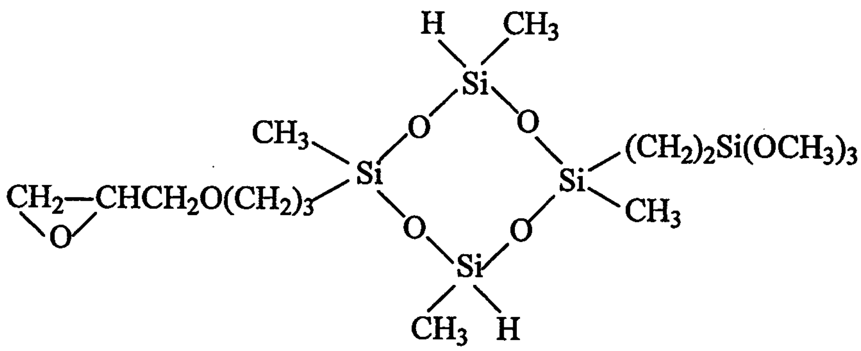

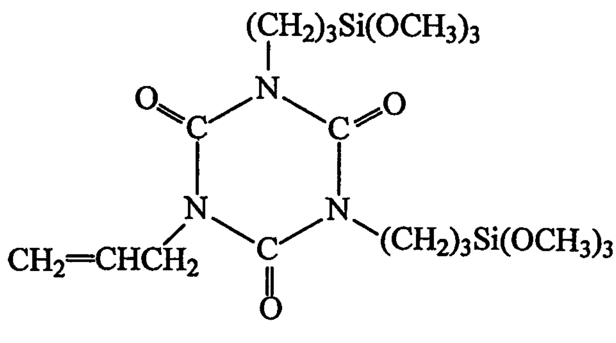

The component (d) may be either a single compound, or a combination of two or more compounds.

[Production of heat-conductive composite sheet]

<Preparation of coating composition for outer layers (B)>

First, the organopolysiloxane of the component (a) and the heat-conductive filler of the component (c) are kneaded together using a mixing device such as a kneader, a Banbury mixer, a planetary mixer or a Shinagawa mixer, if necessary with heating to a temperature of approximately 100°C or higher. During this kneading step, if desired, a reinforcing silica such as a fumed silica or precipitated silica, a silicone oil or silicone wetter, or a flame retardant such as platinum, titanium oxide or benzotriazole may also be added and mixed, provided this addition does not impair the heat conducting performance of the outer layers.

The uniform mixture obtained from the kneading step is cooled to room temperature, and then filtered through a strainer or the like. Subsequently, predetermined amounts of the adhesion promoter of the component (d) and the curing agent of the component (b) are added to the mixture, and a second kneading is conducted using a twin-roll mill or a Shinagawa mixer or the like. During this second kneading step, if desired, an acetylene-compound based addition reaction retarder such as 1-ethynyl-1-cyclohexanol, a colorant such as an organic pigment or inorganic pigment, or a heat resistance improver such as iron oxide or cerium oxide may also be added and mixed.

The outer layer composition obtained following completion of this second kneading step may be supplied directly to the next step as an outer layer coating agent, although if necessary, a solvent such as toluene or the like may be added, and the resulting mixture then mixed in a mixing device such as a planetary mixer or kneader to form the outer layer coating agent.

<Coating step>

The outer layer coating agent obtained using the preparation step described above is applied sequentially to both surfaces of the heat-conductive synthetic resin film layer of the aforementioned inner layer (A), with the application performed in a continuous manner and at a predetermined thickness using a coating apparatus such as a knife coater or kiss coater equipped with a drying furnace, a heating furnace and a winding device. Following application, the solvent is dried and evaporated, and by subsequently heating the applied coating, either at 80 to 200°C and preferably 100 to 150°C in the case of an addition reaction-curable composition, or at 100 to 200°C and preferably 110 to 180°C in the case of a peroxide curing composition, thereby causing cross-linking and curing of the coating, a heat-conductive silicone rubber composite sheet of the present invention that exhibits excellent thermal conductivity, electrical insulation, mechanical strength, flexibility, heat resistance and durability can be obtained.

The heat-conductive silicone rubber composite sheet of the present invention is not restricted to laminated structures of three layers, and if desired, the layer (A) and the layer (B) described above may be combined in a (B)/(A)/(B)/(A)/(B) type 5-layer laminated structure, or a separate layer of glass cloth, a graphite sheet or aluminum foil or the like may also be included within the structure.

EXAMPLES

A more detailed description of the present invention is presented below based on a series of examples and Comparative Examples, although the present invention is in no way limited by the examples presented below. In the following examples, values for the thermal conductivity of the heat-conductive synthetic resin film used as the inner layer refer to values measured by the applicants at 25°C using a thermal resistance measuring apparatus based on a laser flash method (LFA447 NanoFlash, a xenon flash analyzer, manufactured by Netzch Group). The measurement was carried out for one surface of each synthetic resin film after carbon was spray-coated on the surface.

[Example 1]

(a) 100 parts by mass of a dimethylpolysiloxane having both terminals blocked with dimethylvinylsiloxy groups and with an average polymerization degree of 8,000, and (c) 750 parts by mass of a heat-conductive filler consisting of an aluminum oxide powder with an average particle size of 4 μm were kneaded for 40 minutes at room temperature in a Banbury mixer. Following subsequent filtering through a 100 mesh strainer, 100 parts by mass of this mixture of (a)+(c) was combined with (d) 1.0 parts by mass of an adhesion promoter consisting of a silicon compound represented by a structural formula shown below:

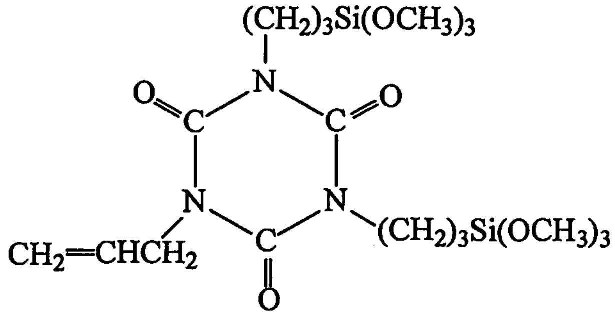

(b) 1.9 parts by mass of di(2-methylbenzoyl) peroxide as an organic peroxide, and 0.4 parts by mass of a colorant KE-color-R20 (a product name, manufactured by Shin-Etsu Chemical Co., Ltd.), and the resulting mixture was then subjected to further kneading using a twin-roll mill to obtain a mixture.

Subsequently, 100 parts by mass of the thus obtained mixture was dissolved in 47 parts by mass of toluene to prepare a coating agent, and this coating agent was first applied to one surface of a heat-conductive aromatic polyimide-based film (product name: Kapton 100MT, an aluminum oxide powder-dispersed type, manufactured by DuPont-Toray Co., Ltd., thermal conductivity: 0.42 W/m·K, thickness: 25 μm). The applied coating was then treated under conditions including a drying temperature of 80°C and a curing temperature of 150°C to form a rubber layer with a thickness of 62.5 μm. Subsequently, the other surface of the heat-conductive aromatic polyimide-based film was coated, dried and cured in the same manner, yielding a heat-conductive silicone rubber composite sheet with an overall thickness of 150 μm.

[Example 2]

With the exception of altering the amount of the silicone compound of the component (d) from 1.0 parts by mass to 0.5 parts by mass, a heat-conductive silicone rubber composite sheet was prepared in the same manner as Example 1.

[Example 3]

(a) 100 parts by mass of a dimethylpolysiloxane having both terminals blocked with dimethylvinylsiloxy groups and with a viscosity at 25°C of 600 $mm^2/s$ was combined with a heat-conductive filler consisting of (c1) 750 parts by mass of an aluminum oxide powder with an average particle size of 4 μm and (c2) 250 parts by mass of a boron nitride powder with an average particle size of 9 μm, and the resulting mixture was kneaded for 20 minutes at room temperature in a planetary mixer. Following filtering through a 100 mesh strainer, 100 parts by mass of the thus obtained mixture of (a)+(cl)+(c2) was combined with (d) 1.0 parts by mass of an adhesion promoter consisting of a silicon compound represented by a structural formula shown below:

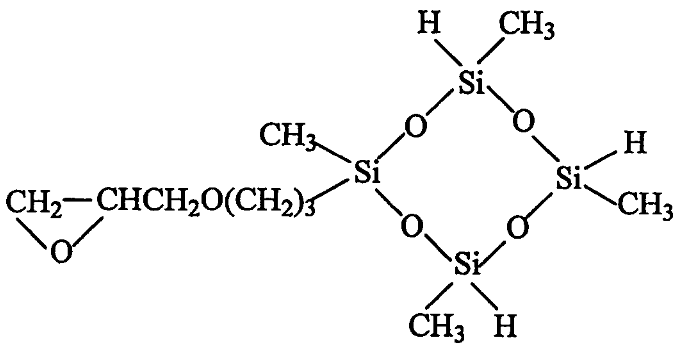

and (b1) 0.35 parts by mass of a vinylsiloxane complex of chloroplatinic acid (platinum metal content: 1% by mass) and mixed uniformly. Subsequently, 0.06 parts by mass of 1-ethynyl-1-cyclohexanol was added as an addition reaction retarder, and then (b2) 1.5 parts by mass of a methylhydrogenpolysiloxane (Si-H group content: 0.0050 mol/g) represented by a structural formula shown below (molar ratio of Si-H groups / vinyl groups within (a): 4.0) was added and mixed uniformly to complete preparation of a silicone rubber composition.

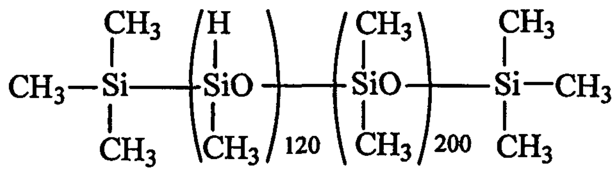

Subsequently, 100 parts by mass of the thus obtained mixture was dissolved in 15 parts by mass of toluene to prepare a coating agent, and this coating agent was first applied to one surface of a heat-conductive aromatic polyimide-based film (product name: Kapton 100MT, manufactured by DuPont-Toray Co., Ltd., thermal conductivity: 0.42 W/m·K, thickness: 25 μm). The applied coating was then treated under conditions including a drying temperature of 80°C and a curing temperature of 150°C to form a rubber layer with a thickness of 62.5 μm. Subsequently, the other surface of the heat-conductive aromatic polyimide-based film was coated, dried and cured in the same manner, yielding a heat-conductive silicone rubber composite sheet with an overall thickness of 150 μm.

[Example 4]

The procedures in Example 1 were repeated except that the adhesion promoter of the component (d) was replaced with 1.0 part by mass of a silicon compound of the following structural formula:

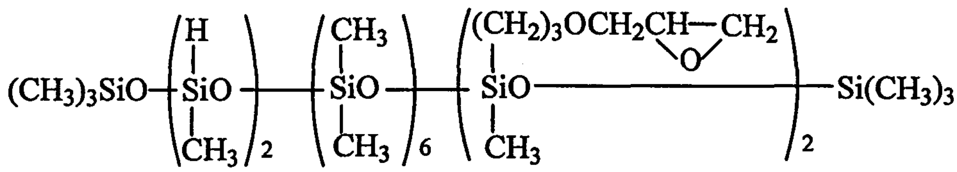

to yield a heat-conductive silicone rubber composite sheet with an overall thickness of 150 μm.

[Example 5]

The procedures in Example 1 were repeated except that the adhesion promoter of the component (d) was replaced with 1.0 part by mass of a silicon compound of the following structural formula:

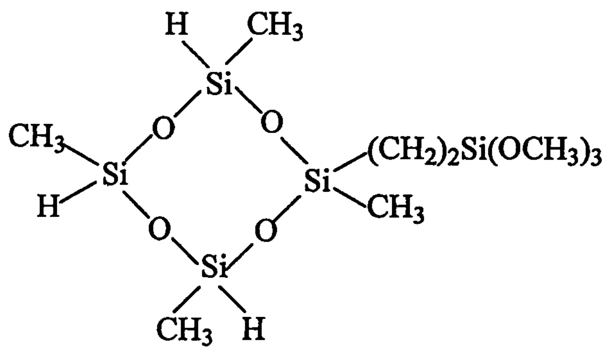

to yield a heat-conductive silicone rubber composite sheet with an overall thickness of 150 μm.

[Example 6]

(a) 100 parts by mass of a dimethylpolysiloxane having both terminals blocked with dimethylvinylsiloxy groups and with a viscosity at 25°C of 5000 $mm^2/s$ was combined with a heat-conductive filler consisting of (c) 750 parts by mass of an aluminum oxide powder with an average particle size of 4 μm, and the resulting mixture was kneaded for 20 minutes at room temperature in a planetary mixer. Following filtering through a 100 mesh strainer, 100 parts by mass of the thus obtained mixture of (a)+(c) was combined with (d) 0.5 parts by mass of an adhesion promoter consisting of a silicon compound represented by a structural formula shown below:

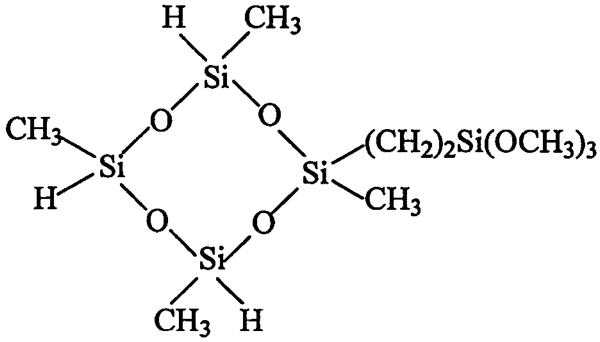

and (b1) 0.35 parts by mass of a vinylsiloxane complex of chloroplatinic acid (platinum metal content: 1% by mass) and mixed uniformly. Subsequently, 0.06 parts by mass of 1-ethynyl-1-cyclohexanol was added as an addition reaction retarder, and then (b2) 1.25 parts by mass of a methylhydrogenpolysiloxane (Si-H group content: 0.0016 mol/g) represented by a structural formula shown below (molar ratio of Si-H groups / vinyl groups within (a): 2.8) was added and mixed uniformly to complete preparation of a silicone rubber composition.

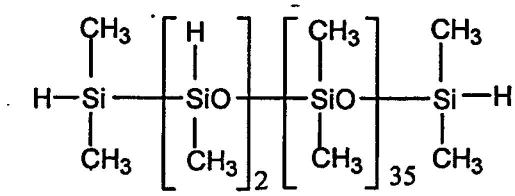

Subsequently, 100 parts by mass of the thus obtained mixture was dissolved in 15 parts by mass of toluene to prepare a coating agent, and this coating agent was first applied to one surface of a heat-conductive aromatic polyimide-based film (product name: Kapton 100MT, manufactured by DuPont-Toray Co., Ltd., thermal conductivity: 0.42 W/m·K, thickness: 25 μm). The applied coating was then treated under conditions including a drying temperature of 80°C and a curing temperature of 150°C to form a rubber layer with a thickness of 62.5 μm. Subsequently, the other surface of the heat-conductive aromatic polyimide-based film was coated, dried and cured in the same manner, yielding a heat-conductive silicone rubber composite sheet with an overall thickness of 150 μm.

[Example 7]

The procedures in Example 6 were repeated except that the adhesion promoter of the component (d) was replaced with 0.5 part by mass of a silicon compound of the following structural formula:

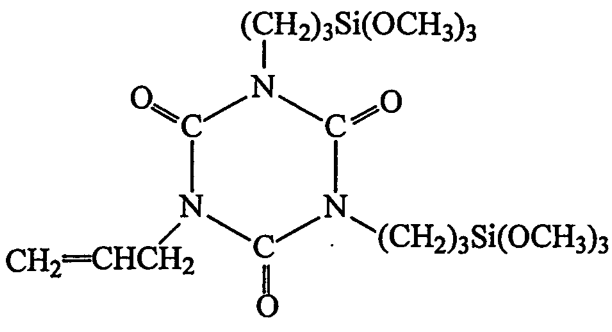

to yield a heat-conductive silicone rubber composite sheet with an overall thickness of 150 μm.

[Comparative Example 1]

With the exception of replacing the heat-conductive aromatic polyimide-based film used in Example 1 (product name: Kapton 100MT, manufactured by DuPont-Toray Co., Ltd., thermal conductivity: 0.42 W/m·K, thickness: 25 μm) with an aromatic polyimide-based film (product name: Kapton 100H, manufactured by DuPont-Toray Co., Ltd., thermal

conductivity: 0.08 W/m·K, thickness: 25 μm), a heat-conductive silicone rubber composite sheet was prepared in the same manner as Example 1.

[Comparative Example 2]

With the exception of not using the silicon compound of the component (d), a heat-conductive silicone rubber composite sheet with a thickness of 150 μm was prepared in the same manner as Example 1.

Tables 1 and 2 show the composition of the mixtures containing the component (a) and the component (c), and the composition of the coating agents, for examples 1 to 3 and Comparative Examples 1 and 2. In Tables 1 and 2, the values for the components all refer to the amounts in parts by mass.

[Methods of evaluating various properties]

Using the methods described below, the properties of each of the composite sheets prepared in Examples 1 to 3 and Comparative Examples 1 and 2 were measured. The results of the measurements are shown in Tables 1 and 2.

[General properties]

- Tensile strength (MPa), tear strength (kN/m), and breakdown voltage (kV) were measured in accordance with the methods prescribed in JIS K6249.
- Adhesive Strength (N/cm)

Measured in accordance with JIS K 6259, by performing a 180° peel test and measuring the adhesive strength. A two-layered structure was prepared as the test piece, by forming a rubber layer of thickness 1 mm on one surface of an aromatic polyimide-based film of thickness 25 μm.

[Thermal properties]

- Heat Resistance (°C/W)

A sample was sandwiched between a heat sink (a heat-radiating component) and a TO-3P type transistor (contact surface area: approximately 2.7 $cm^2$), and after securing the structure with a screw of diameter 3.0 mm (screw pressure: 49.0 ± 9.8 N (5±1 Kgf)), electric power (10 W) was supplied to the transistor. After 10 minutes, the temperature of the transistor ($T_1$) and the temperature of the heat sink ($T_2$) were measured, and the heat resistance was calculated using the following formula.

$$\text{Heat Resistance } (^\circ C/W) = (T_1 - T_2) / 10$$

[Table 1]

| | | Example 1 | Example 2 | Example 3 | Example 4 | Example 5 | Example 6 | Example 7 |
|---|---|---|---|---|---|---|---|---|
| Inner layer | | Kapton 100MT | Kapton 100MT | Kapton 100MT | Kapton 100MT | Kapton 100MT | Kapton 100MT | Kapton 100MT |
| Mixture (a)+(c) | (a) organopolysiloxane | 100 | 100 | 100 | 100 | 100 | 100 | 100 |
| | (c) heat-conductive filler | 750 | 750 | ~~750~~ 1,000 | 750 | 750 | 750 | 750 |
| Coating agent | (a) + (c) | 100 | 100 | 100 | 100 | 100 | 100 | 100 |
| | (d) adhesion promoter | 1.0 | 0.5 | 1.0 | 1.0 | 1.0 | 0.5 | 0.5 |
| | (b) curing agent | 1.9 | 1.9 | 1.9[*] | 1.9 | 1.9 | 1.25[*] | 1.25[*] |
| | colorant | 0.4 | 0.4 | 0.4 | 0.4 | 0.4 | 0.4 | 0.4 |
| Properties | thickness (μm) | 150 | 150 | 150 | 150 | 150 | 150 | 150 |
| | tensile strength (MPa) | 42 | 49 | 42 | 44 | 46 | 39 | 46 |
| | tear strength (kN/m) | 46 | 56 | 46 | 43 | 43 | 38 | 43 |
| | breakdown voltage (kV) | 13 | 13 | 13 | 12 | 12 | 11 | 11 |
| | adhesive strength (N/cm) | 36.3 (rupture) | 31.6 (rupture) | 30.3 (rupture) | 30.1 (rupture) | 28.6 (rupture) | 16.8 (rupture) | 18.6 (rupture) |
| | heat resistance (°C/W) | 0.45 | 0.44 | 0.45 | 0.44 | 0.44 | 0.42 | 0.42 |

(* Note: The amount of the curing agent (b) in Examples 3, 6 and 7 is the amount added of the methylhydrogenpolysiloxane.)

[Table 2]

| | | Comparative Example 1 | Comparative Example 2 |
|---|---|---|---|
| Inner layer | | Kapton 100H | Kapton 100MT |
| Mixture (a)+(c) | (a) organopolysiloxane | 100 | 100 |
| | (c) heat-conductive filler | 750 | 750 |
| Coating agent | (a) + (c) | 100 | 100 |
| | (d) adhesion promoter | 1.0 | - |
| | (b) curing agent | 1.5 | 1.9 |
| | colorant | - | 0.4 |
| Properties | thickness (μm) | 150 | 150 |
| | tensile strength (MPa) | 46 | 42 |
| | tear strength (kN/m) | 60 | 55 |
| | breakdown voltage (kV) | 12 | 12 |
| | adhesive strength (N/cm) | 40.4 (rupture) | 4.2 (peeled) |
| | heat resistance (°C/W) | 0.65 | 0.45 |

INDUSTRIAL APPLICABILITY

The heat-conductive silicone rubber composite sheet according to the present invention is useful as a heat-radiating member that is interposed between a heat-generating electronic component and a heat-radiating component.

**Claims**

**1.** A heat-conductive silicone rubber composite sheet, comprising a laminated structure comprising an inner layer and a pair of outer layers laminated to both surfaces of the inner layer, wherein

(A) the inner layer is an electrically insulating synthetic resin film layer which is formed from a film comprising an aromatic polyimide and a heat-conductive powder dispersed within the aromatic polyimide and has a thermal conductivity of not less than 0.3 W/m·K and not more than 10 W/m·K, and
(B) the outer layers are silicone rubber layers each having a thickness of a range from 30 to 800 μm, and being formed by curing a composition comprising: (a) an organopolysiloxane, (b) a curing agent, (c) a heat-conductive filler, and (d) a silicon compound-based adhesion promoter having at least one group selected from the group consisting of an epoxy group, alkoxy groups, a methyl group, a vinyl group, and a group represented by the formula Si-H, wherein

the amount added of the component (c) is within a range from 100 to 1,800 parts by mass, per 100 parts by mass of the component (a).

**2.** The heat-conductive silicone rubber composite sheet according to claim 1, wherein the electrically insulating synthetic resin film layer has a thermal conductivity of not less than 0.4 W/m·K and not more than 10 W/m·K.

**3.** The heat-conductive silicone rubber composite sheet according to claims 1 or 2, wherein the heat-conductive powder is a zinc oxide powder, aluminum oxide powder, magnesium oxide powder, aluminum hydroxide powder, boron

nitride powder, aluminum nitride powder, silicon carbide powder, diamond powder, or a combination of two or more of these powders.

4. The heat-conductive silicone rubber composite sheet according to any one of claims 1 to 3, wherein the curing agent of the component (b) is a hydrosilylation reaction curing agent, and the silicon compound of the component (d) comprises a vinyl group, a group represented by the formula: Si-H or both thereof, and an epoxy group, an alkoxy group or both thereof.

5. The heat-conductive silicone rubber composite sheet according to any one of claims 1 to 3, wherein the curing agent of the component (b) is an organic peroxide compound, the silicon compound of the component (d) comprises a methyl group, a vinyl group or both thereof, and an epoxy group, an alkoxy group or both thereof.

## Patentansprüche

1. Wärmeleitende Silikongummi-Verbundstoffplatte, die eine laminierte Struktur aufweist, die eine innere Schicht und ein Paar äußerer Schichten aufweist, die an beide Oberflächen der inneren Schicht laminiert sind, wobei

   (A) die innere Schicht eine elektrisch isolierende Kunstharz-Filmschicht ist, die aus einem Film gebildet ist, der ein aromatisches Polyimid und ein wärmeleitendes Pulver aufweist, das in dem aromatischen Polyimid verteilt ist, und eine Wärmeleitfähigkeit von nicht weniger als 0,3 W/m·K und nicht mehr als 10 W/m·K aufweist, und
   (B) die äußeren Schichten Silikongummischichten sind, die jeweils eine Dicke in einem Bereich von 30 bis 800 μm aufweisen und durch Härten einer Zusammensetzung gebildet sind, welche umfasst: (a) ein Organopolysiloxan, (b) einen Härter, (c) einen wärmeleitenden Füllstoff und (d) einen Haftvermittler auf Basis einer Siliciumverbindung, der mindestens eine Gruppe aufweist, die aus der Gruppe ausgewählt ist, die aus einer Epoxidgruppe, Alkoxygruppen, einer Methylgruppe, einer Vinylgruppe und einer Gruppe, die durch die Formel Si-H dargestellt ist, besteht, wobei

   die Menge, die der Komponente (c) zugesetzt ist, innerhalb eines Bereichs von 100 bis 1.800 Masseteile je 100 Masseteile der Komponente (a) ist.

2. Wärmeleitende Silikongummi-Verbundstoffplatte nach Anspruch 1, wobei die elektrisch isolierende Kunstharz-Filmschicht eine Wärmeleitfähigkeit von nicht weniger als 0,4 W/m·K und nicht mehr als 10 W/m·K aufweist.

3. Wärmeleitende Silikongummi-Verbundstoffplatte nach Anspruch 1 oder 2, wobei das wärmeleitende Pulver ein Zinkoxidpulver, Aluminiumoxidpulver, Magnesiumoxidpulver, Aluminiumhydroxidpulver, Bornitridpulver, Aluminiumnitridpulver, Siliciumcarbidpulver, Diamantpulver oder eine Kombination von zwei oder mehr dieser Pulver ist.

4. Wärmeleitende Silikongummi-Verbundstoffplatte nach einem der Ansprüche 1 bis 3, wobei der Härter der Komponente (b) ein Hydrosilylierungsreaktions-Härter ist und die Siliciumverbindung der Komponente (d) eine Vinylgruppe, eine Gruppe, die durch die Formel Si-H dargestellt ist, oder beide dieser Gruppen aufweist und eine Epoxidgruppe, eine Alkoxygruppe oder beide dieser Gruppen aufweist.

5. Wärmeleitende Silikongummi-Verbundstoffplatte nach einem der Ansprüche 1 bis 3, wobei der Härter der Komponente (b) eine organische Peroxidverbindung ist, die Siliciumverbindung der Komponente (d) eine Methylgruppe, eine Vinylgruppe oder beide dieser Gruppen und eine Epoxidgruppe, eine Alkoxygruppe oder beide dieser Gruppen aufweist.

## Revendications

1. Feuille composite en caoutchouc de silicone thermoconducteur, comprenant une structure laminée qui comprend une couche interne et une paire de couches externes laminées sur les deux surfaces de la couche interne, dans laquelle

   (A) la couche interne est une couche de film de résine synthétique électriquement isolant qui est formée d'un film comprenant un polyimide aromatique et une poudre thermoconductrice dispersée dans le polyimide aromatique et a une conductivité thermique de pas moins de 0,3 W/m·K et de pas plus de 10 W/m·K, et

(B) les couches externes sont des couches de caoutchouc de silicone chacune ayant une épaisseur dans une plage de 30 à 800 μm, et étant formées par durcissement d'une composition comprenant : (a) un organopolysiloxane, (b) un agent de durcissement, (c) une charge thermoconductrice et (d) un promoteur d'adhésion à base de composé de silicium ayant au moins un groupe choisi dans le groupe constitué par un groupe époxy, des groupes alcoxy, un groupe méthyle, un groupe vinyle et un groupe représenté par la formule Si-H, où

la quantité ajoutée du composé (c) se situe dans une plage de 100 à 1 800 parties en masse, par 100 parties en masse du composant (a).

**2.** Feuille composite en caoutchouc de silicone thermoconducteur selon la revendication 1, dans lequel la couche de film de résine synthétique électriquement isolant a une conductivité thermique de pas moins de 0,4 W/m·K et de pas plus de 10 W/m•K.

**3.** Feuille composite en caoutchouc de silicone thermoconducteur selon les revendications 1 ou 2, dans laquelle la poudre thermoconductrice est une poudre d'oxyde de zinc, une poudre d'oxyde d'aluminium, une poudre d'oxyde de magnésium, une poudre d'hydroxyde d'aluminium, une poudre de nitrure de bore, une poudre de nitrure d'aluminium, une poudre de carbure de silicium, une poudre de diamant ou une combinaison de deux ou plus de deux de ces poudres.

**4.** Feuille composite en caoutchouc de silicone thermoconducteur selon l'une quelconque des revendications 1 à 3, dans laquelle l'agent de durcissement du composant (b) est un agent de durcissement par réaction d'hydrosilylation et le composé de silicium du composant (d) comprend un groupe vinyle, un groupe représenté par la formule : Si-H ou les deux d'entre eux, et un groupe époxy, un groupe alcoxy ou les deux d'entre eux.

**5.** Feuille composite en caoutchouc de silicone thermoconducteur selon l'une quelconque des revendications 1 à 3, dans laquelle l'agent de durcissement du composant (b) est un composé peroxyde organique, le composé de silicium du composant (d) comprend un groupe méthyle, un groupe vinyle ou les deux d'entre eux, et un groupe époxy, un groupe alcoxy ou les deux d'entre eux.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 47032400 A
- JP 54184074 U
- JP 2024383 B
- JP 2004122664 A
- JP 2001018330 A
- JP 11157011 A
- JP 10237228 A